# EUROPEAN PATENT APPLICATION

(11) **EP 1 191 373 A1**
(43) Date of publication of application: **27.03.2002**
(21) Application number: 00402597.9
(22) Date of filing: 20.09.2000
(51) Int. Cl.: G02B 6/35

(54) **Method of simultaneously etching waveguides and intersecting trenches for a switching matrix application**

(71) Applicant: Corning Incorporated, Corning, New York 14831 (US)
(72) Inventor: Guilhem, Jean-Marie Alibert, Corning, NY 14831 (US); Beguin, Alain Marcel, Corning, NY 14831 (US); Jouanno, Jean-Marc Martin, Corning, NY 14831 (US); Lehuede, Philippe, Corning, NY 14831 (US); Renvaze, Christophe Francois Pierre, Corning, NY 14831 (US)
(74) Representative: Boon, Graham Anthony

(57) **Abstract**

A method of fabricating an optical waveguide device that includes a waveguide and a trench, comprises providing a substrate material that includes a substrate layer, an underclad layer, a core layer, and an overclad layer. A waveguide and trench pattern is simultaneously defined in the substrate material and the substrate material is etched to form a waveguide circuit structure that includes the waveguide and trench pattern. Thus, the waveguide and the trench are self-aligned. The trenches can house moveable mirrors and/or index-matching fluid in order to work as a switch.

## Description

### BACKGROUND OF THE INVENTION

### Field of the Invention

The present invention is directed to a method of fabricating trenches in an optical waveguide device. In particular, the present invention is directed to a method of fabricating trenches simultaneously with optical waveguides.

### Description of the Related Art

Planar optical waveguide devices have numerous applications, such as cross-connect switches for telecommunications. In particular, a multi-channel cross-connect switch matrix can be utilized to provide switching for multiple communication lines in a single integrated device. These integrated optical waveguide devices are typically fabricated using one or more layers of waveguide material (such as silica, a dielectric, a thin film, a polymer, a sol-gel, and the like) deposited on an insulator or other substrate (such as silica and silicon). Deposition techniques such as vapor deposition, plasma enhanced chemical vapor deposition (PECVD), sputtering, epitaxial growth, flame hydrolysis, combinations thereof, and micro-replication techniques such as embossing or printing can be utilized. Patterning/etching techniques such as photolithography, e-beam lithography, reactive ion etching ("RIE"), inductively coupled plasma etching ("ICP"), and micro-molding are also utilized in the fabrication process.

For example, the cross-connect switch can include an optical circuit which consists of a grid of waveguides embedded in a silica overclad layer, with etched trenches formed at one or more crossings or intersections. The trenches can be filled with an index matching fluid that matches the refractive index of the waveguide core. These devices can further include a micro-electro-mechanical system ("MEMS") die consisting of an actuator and protruding mirror system designed to slide in the trench. Once the mirrors are inserted in the trenches, they can be actuated to intercept the light path and reflect it at 90°, or be removed from the light path to allow straight passage of the light. The index matching fluid helps to avoid interface reflection at the trench edges between the waveguide core and the air in the trench.

In order to actuate the switch, several techniques can be used. A mirror can be moved in and out of the intersection by thermal expansion techniques. Also, the ends of a waveguide can include facets cut at mirror quality so that an index matching fluid can be used wherein the fluid is moved physically in and out of the intersection using an actuator. Alternatively, the fluid can be thermally or electrolytically converted into a gas to create a bubble.

The fabrication of such devices conventionally includes two separate fabrication steps: first, creating the waveguide, and second, etching a trench for eventual placement of a moveable mirror in the trench.

For example, Figs. 3A-3E illustrate such a conventional process. As shown in Fig. 3A, a starting material 100 includes a substrate layer 102, an underclad layer 104, and a core layer 106. The substrate layer 102 is a silica (SiO₂) or silicon material. The underclad layer 104 is silica material, either doped or undoped. Dopants can include, for example, boron, germanium, or phosphorous. The core layer 106 material is a doped-SiO₂ material.

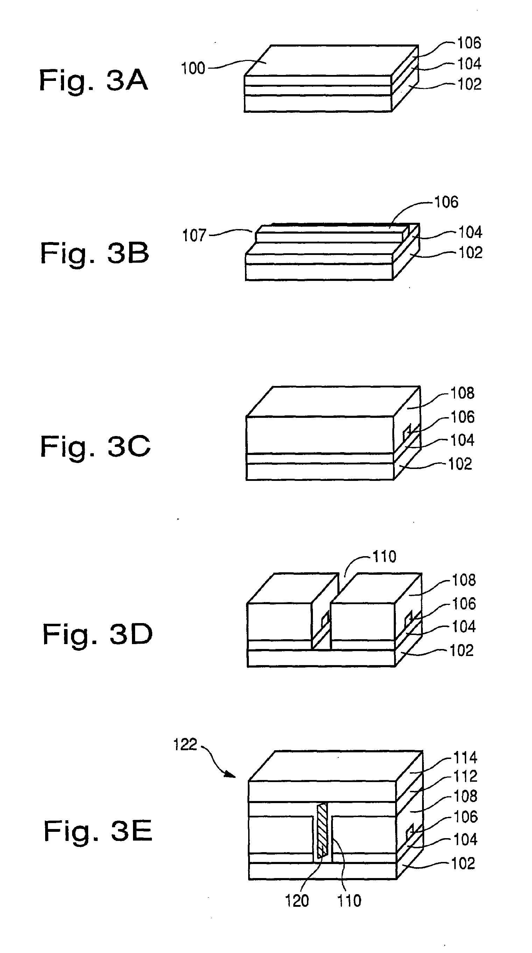

The starting material is then covered with a stop etch layer and a thin photoresist material (not shown) and a photolithographic technique utilizing a patterned photo-mask is used to image a waveguide pattern onto the photoresist. An etching process is then utilized to define the waveguide, resulting in the structure 107 shown in Fig. 3B, wherein only a single waveguide is shown for illustrative purposes. This technique can, of course, be utilized to define multiple waveguides. In this example, the waveguide is a generally rectangular shape and comprises core layer material 106.

Next, as shown in Fig. 3C, a solid overclad layer 108 can be deposited over the patterned core layer 106 by a conventional deposition technique. The overclad layer typically consists of a silica (doped or undoped) material.

A trench 110, shown in Fig. 3D, is then formed in a separate photolithographic and etching process. An etch stop layer and a photoresist layer is deposited onto the overclad layer 108 and a second photo-mask is used to image the trench pattern onto the photoresist. The trench 110 is then etched by a conventional etching technique, such as RIE.

The resulting integrated device 122, shown in Fig. 3E, is then formed by utilizing an encapsulation technique, where the device 122 includes an index liquid layer 112 enclosed by a MEMS die 114.

However, the above conventional process is problematic in ensuring proper alignment between the waveguides and the location of the fabricated trenches because the waveguide fabrication and trench fabrication steps are conducted separately. While alignment marks can be included on the photo-masks used in the separate photolithographic processes, the deposition of the overclad layer may obscure alignment marks previously etched onto the waveguide layer or underclad layer thus making highly accurate alignment difficult.

### SUMMARY OF THE INVENTION

Thus, what is needed is a straightforward method of fabricating a trench in a waveguide device so that alignment between the trench and the waveguide is improved.

In view of the foregoing, according to an embodiment of the present invention, a method of fabricating an optical waveguide device that includes a waveguide and a trench, comprises providing a substrate material that includes a substrate layer, an underclad layer, a core layer, and an overclad layer. A waveguide and trench pattern is simultaneously defined in the substrate material and the substrate material is etched to form a waveguide circuit structure that includes the waveguide and trench pattern.

According to another embodiment of the present invention, a method of fabricating an optical waveguide device that includes a waveguide and a trench, comprises providing a substrate material that includes a substrate layer, a first underclad layer, and an etch stop layer. A first waveguide and trench pattern is defined on the etch stop layer, which is subsequently etched. A second underclad layer, a core layer, and an overclad layer is deposited on the substrate material. A waveguide and trench pattern is simultaneously defined in the substrate material, with the waveguide and trench pattern substantially corresponding to a position of said first waveguide and trench pattern. The substrate material is etched to form a waveguide circuit structure that includes the waveguide and trench pattern, where the etching comprises a deep etch of the substrate material such that a portion of the first underclad layer corresponding to a position of the trench is removed during the deep etch.

According to yet another embodiment of the present invention, a method of fabricating an optical waveguide device that includes a waveguide and a trench, comprises providing a substrate material that includes a substrate layer, an underclad layer, a core layer, and an overclad layer. An etch stop layer is deposited onto the overclad layer and is lithographically patterned and etched with a waveguide pattern. A photoresist layer is deposited on the patterned etch stop layer and substrate material and is lithographically patterned with a trench pattern. An etch of the etch stop layer and a partial etch of the overclad layer is performed such that the etched portion of the etch stop layer and of the overclad layer corresponds to a position of the trench. After removing the photoresist, a waveguide and trench pattern is simultaneously defined in the substrate material and the substrate material is etched to form a waveguide circuit structure that includes the waveguide and trench pattern.

Further features of the invention form the subject matter of the claims and will be explained in more detail, in conjunction with further advantages of the invention, with reference to exemplary embodiments.

### BRIEF DESCRIPTION OF THE DRAWINGS

The accompanying drawings, which are incorporated herein and form part of the specification, illustrate the present invention and, together with the description, further serve to explain the principles of the invention and to enable a person skilled in the pertinent art to make and use the invention. The drawings, however, do not limit the scope or practice of the invention.
Figs. 1 and 2 show an exemplary planar waveguide device from a top view and a side view, respectively;
Figs. 3A - 3E show a schematic illustration of method of fabricating a trench in a waveguide structure using separate waveguide definition and trench fabrication steps;
Figs. 4A-4C show a schematic illustration of method of fabricating a trench in a waveguide structure according to one embodiment of the present invention;
Figs. 5A-5D show a schematic illustration of method of fabricating a trench in a waveguide structure according to another embodiment of the present invention; and
Figs. 6A-6F show a schematic illustration of method of fabricating a trench in a waveguide structure according to yet another embodiment of the present invention.

### DETAILED DESCRIPTION OF THE PREFERRED EMBODIMENTS

The present invention is directed to a method of fabricating a trench in an optical waveguide device.

The method according to a first embodiment of the present invention includes the simultaneous fabrication of a trench or trenches and the optical waveguides, instead of utilizing two separate steps: first, embedding the optical waveguide in a silica overclad layer and second, etching the trench or trenches. In particular, utilizing a single deep etching, the trenches and the waveguides are simultaneously defined. The underclad layer is fully or partially removed in the trenches and subsequently in between each waveguide.

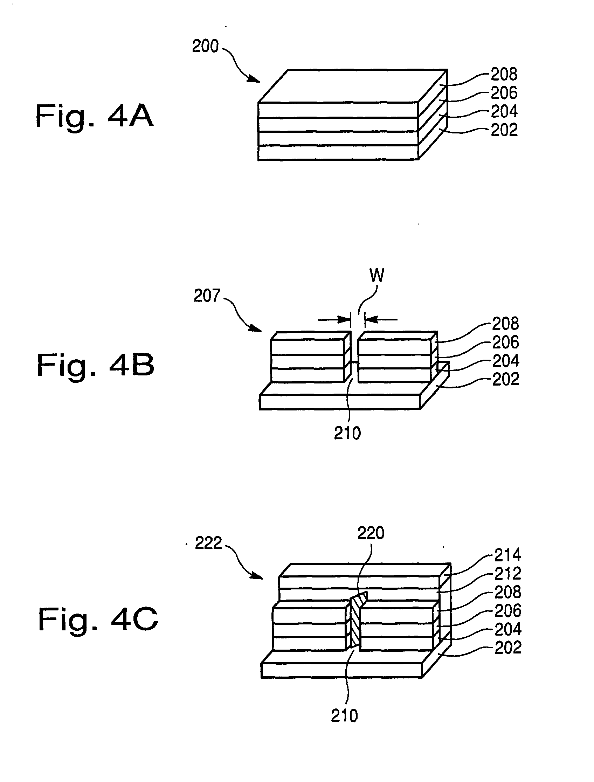

To realize simultaneously trenches and optical waveguides, a method according to a first embodiment of the present invention is described in detail with respect to Figs. 4A-4C. As shown in Fig. 4A, a starting material 200 includes a substrate layer 202, an underclad layer 204, a core layer 206, and an overclad layer 208. The substrate layer 202 can be any conventional substrate used in waveguide applications. In one aspect of this embodiment of the present invention, the substrate can be a silica-based material, such as Si, SiO₂, doped-SiO₂, SiON, and the like, or TaO. Other conventional substrates will become apparent to those of ordinary skill in the art given the present description. The substrate can be of various geometrical shapes, such as rectangular or circular. Preferably, the substrate layer 202 is a Si or SiO₂ substrate of circular shape, having a diameter of about 100 - 300 millimeter (mm), and a thickness of between 0.5 - 2 mm.

In addition, for some materials such as silicon, the substrate layer 202 can also include a buffer layer located at or near the interface with the underclad layer 204.

Starting material 200 can further include an underclad layer 204, comprising a cladding material, having a thickness of from about less than 10 micrometer (µm) to about 20 µm. Preferably, layer 204 comprises a layer of doped or undoped-SiO₂, having a thickness of about 15 µm. Underclad layer 204 can be deposited on substrate layer 202 by conventional deposition techniques.

Starting material 200 further includes a core layer 206, which can be selected from materials such as, but without limitation, doped-silica based materials and other conventional materials used for waveguides. For example, in a preferred embodiment, layer 206 is a doped-SiO₂ layer, having an index of refraction of about 1.46, and a thickness of about 4 - 10 µm. In a preferred embodiment, core layer 206 has a slightly higher index of refraction than underclad layer 204. Dopants can include, for example, boron, germanium, or phosphorous. Core layer 206 can be deposited on underclad layer 204 by conventional deposition techniques, such as sputtering, flame hydrolysis deposition (FHD), chemical vapor deposition (CVD), and plasma-enhanced chemical vapor deposition (PECVD).

Substrate material 200 further includes an overclad layer 208 that can be the same material as underclad layer 204. Overclad layer 208 can be deposited on core layer 206 by conventional deposition techniques. The overclad layer 208 can have a thickness of about 10 µm to about 30 µm.

Using the above structure, a photolithography/etching technique is utilized to define the waveguide and trench pattern. For example, an etch stop layer is deposited and a photoresist material (not shown) is spun onto structure 200. A photo-mask (not shown) having a pattern corresponding to the waveguide structure and the trench positioning is exposed on the photoresist by a conventional light source, such as an ultraviolet source. For example, the starting material 200 can be disposed directly behind the photo-mask with respect to the light source so that the light transmitted through the photo-mask creates an interfering beam pattern on the thin photoresist layer, which corresponds to the desired waveguide/trench pattern.

After a conventional development of the photoresist, an etching technique, preferably a dry etching process such as RIE, ICP, or ion beam etching is utilized to etch away portions of layers 204, 206, and 208 to define the waveguide, resulting in waveguide circuit structure 207, shown in Fig. 4B. In addition, a trench 210, extending at a depth below the core layer 206, is also formed in this etching process. The trench 210 preferably has a width (w) of about 5 µm to about 12 µm. It is preferred that in the etching step, a significant portion of underclad layer 204 is removed in order to ensure that the trench extends fully below the core layer because a portion of the light propagating in the waveguide also propagates in the underclad layer. With this trench depth, a mirror located in the trench can intercept light propagating in the waveguide and underclad layers. Thus, according to this embodiment of the present invention, the waveguides are defined and the trenches are formed in a single process step without the aforementioned alignment difficulties.

As is depicted in Fig. 4B, trench 210 is simultaneously defined with waveguide layer 206, thus ensuring precise positioning of the trench. In addition, a photo-mask having a multiple trench and waveguide pattern arrangement can be utilized to define multiple trenches and waveguides in a substrate material in a single photolithographic process. The trench/waveguide pattern arrangement can be formed on a conventional photo-mask using a high precision nano-fabrication technique, such as electron beam writing, or by an interfering beam technique, as would be apparent to one of ordinary skill in the photolithographic arts given the present description. In addition, the design of the photo-mask may also depend on the type of light source being utilized and its output wavelength.

The waveguide/trench structure is then encapsulated with a MEMS die to form waveguide device 222, as shown in Fig. 4C. Device 222 comprises the waveguide structure formed above, trench 210, a cavity 212 that is filled with an index matching fluid, and a MEMS die layer 214 that includes a mirror 220 that is coupled to MEMS die layer 214 so that the mirror can move within trench 210 upon actuation. The underclad and overclad layers 204, 208 and the index matching liquid introduced after the report and encapsulation of the MEMS die, ensure the optical confinement of the propagating light.

The MEMS die 214 can consist of a conventional MEMS substrate, such as silicon, and a moveable mirror 220, such as a polished silicon piece coated with a reflective coating, switchably connected to the MEMS substrate, that can be utilized to move within the trench 210. The MEMS die is fabricated by conventional silicon micro-machining. The MEMS die 214 is bonded or sealed to the waveguide structure, such as an opposing pair of sidewalls of the overclad layer 208, by a conventional bonding technique. Conventional bonding machines are commercially available that can provide ± 1.0 µm alignment as between the mirror 220 and the trench 210. The index matching fluid is then added to cavity 212 to fill the structure. Thus, the precision of mirror positioning of device 222 is not limited by the trench position formed above, but rather is only limited to the precision of the MEMS die.

Alternatively, a different MEMS die without a mirror can be utilized according to an alternative aspect of this embodiment of the present invention. For example, instead of using a mirror to incept light propagating along the waveguide, the trench can be filled with a liquid crystal material so that the light is intercepted upon actuation of the liquid crystal by the MEMS die. Precise positioning of the trench is ensured by the above mentioned fabrication process.

The advantages according to this embodiment of the present invention include the simultaneous fabrication of trenches and optical waveguides, the use of a single lithography technique to define the waveguide and trenches, the cost savings in time using a single definition technique, and the self-alignment between the waveguide and trenches.

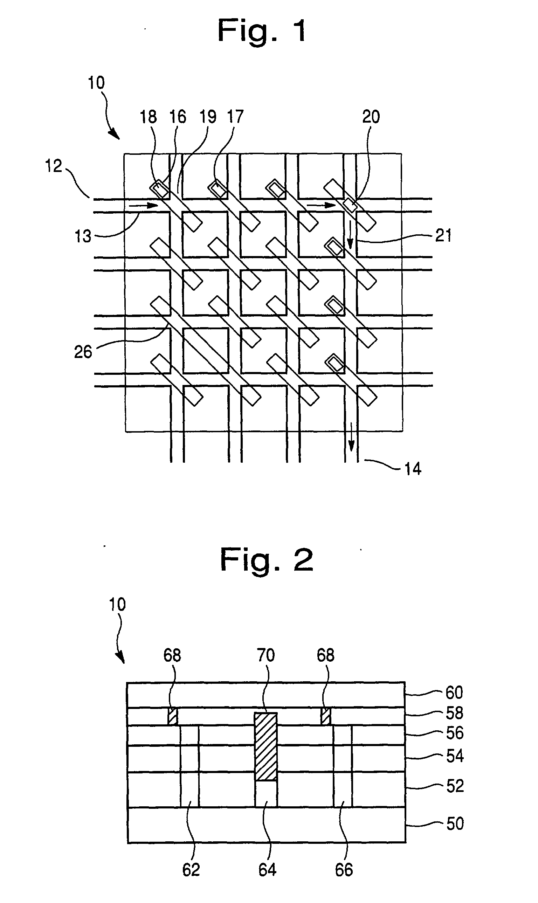

A schematic diagram of an exemplary optical waveguide device fabricated by the aforementioned process, in this case a cross-connect switch matrix 10, is shown in Fig. 1. Switch 10 includes multiple input ports, such as port 12, and multiple output ports, such as port 14. Inside device 10, a plurality of waveguides, such as waveguide 13, communicate optical signals from the input ports to the output ports. In addition, device 10 includes a plurality of trenches, such as trench 16, which can house moveable mirrors, such as mirror 17, that are activated by an actuator (not shown). In this example, the trench 16 extends over a single intersection. However, according to an alternative aspect of this embodiment of the present invention, a trench 26 can extend over a plurality of intersections.

This matrix design allows an incoming optical signal on one line to be switched to any of a plurality of output lines. For example, in this figure, an optical signal transported along waveguide 13 passes through intersections, such as intersection 19, where the moveable mirror is located in a position 18 outside the waveguide. However, when the optical signal reaches an intersection where the mirror is actuated, such as position 20, the optical signal is reflected along a second waveguide, in this case, waveguide 21, so that the optical signal can exit switch 10 at output port 14.

A side view of device 10 is shown in Fig. 2, which shows a cross-section view of the structure of the switch. The waveguide switch includes a substrate layer 50, an underclad layer 52, a core layer 54, an overclad layer 56, index matching liquid 58, and a MEMS 60, similar to those described above. In addition, the device includes a plurality of trenches, such as trenches 62, 64, and 66. A mirror 70 can be actuated to slide into an intersection, as described above, or a mirror 68 can remain outside the intersection of waveguides.

Theoretically, the etching depth of the trenches and in between each waveguide is the same. However, due to the relatively high aspect ratio of the trenches (large depth, low width) the etching depth of the trenches can be, depending on the etching technique, lower than between each waveguide. For example, this situation exists when utilizing a standard RIE process. This lower etching depth could be problematic for the report and encapsulation of the MEMS die.

Thus, in an alternative aspect of the first embodiment of present invention, after the photolithography and etching of the trenches, and prior to the report and encapsulation of the waveguide device, a further etching step can be utilized to further etch the trench depth. Preferably, the undercladding material is different from the cladding and core materials in this alternative aspect. For example, a second dry etch, using a process gas suitable for etching the substrate material, but not the cladding or core materials, can be utilized to provide a slightly deeper trench. Control of the etch can be maintained by controlling the etch time and the process gas concentration.

Alternatively, in a second embodiment of the present invention, a method of fabricating an optical waveguide device provides a deeper etching of the trenches. In this process, a single deep silica etching is used to define simultaneously the trenches and the optical waveguides. The deeper etching depth of the trenches is ensured by an etch stop layer. The layer can be directly deposited on the surface of the substrate (in the case of a SiO₂ substrate) or on a first underclad layer and is patterned in a first photolithography and etching technique. Before report and encapsulation of the MEMS die, the etch stop layer can optionally be removed depending on the report and encapsulation techniques utilized. This etch stop layer defines a reference plane which can be used for the report and encapsulation of the MEMS die.

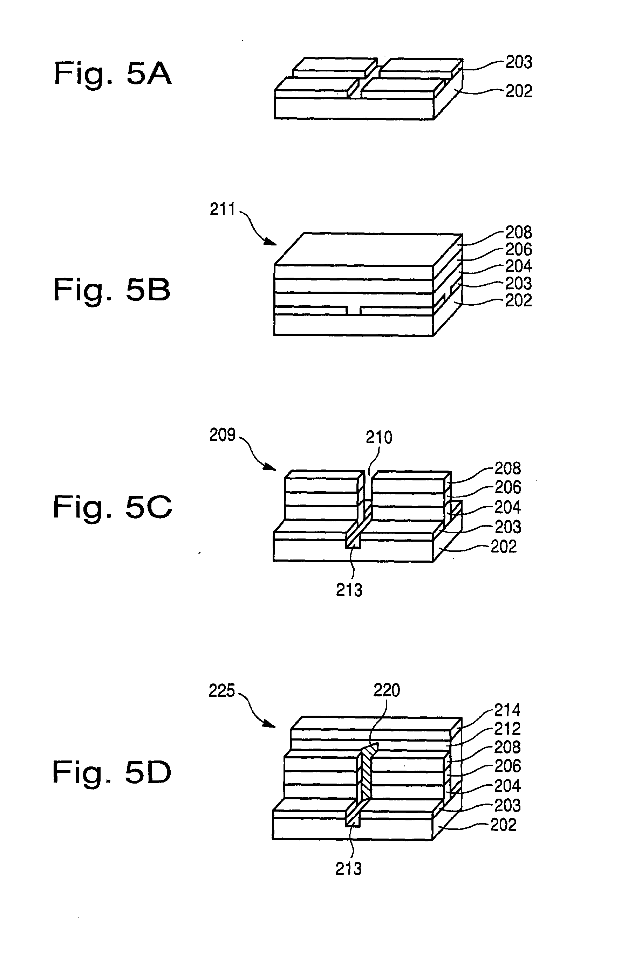

The process according to the second embodiment of the present invention is illustrated with reference to Figs. 5A-5D. In Fig. 5A, a patterned etch stop layer 203, disposed on a substrate layer 202, is defined in a first photolithography and etching process. According to an alternative aspect of this embodiment, the etch stop layer is instead deposited onto a first underclad layer.

The etch stop layer 203 is preferably a silicon layer with thermal oxide to facilitate the underclad, core and overclad layer depositions. The etch stop layer 203 is deposited on substrate layer 202 or on a first underclad layer (not shown) by a conventional deposition technique at a thickness of about 0.3 µm to about 5 µm, preferably about 1.0 µm. The etch stop layer 203 is then lithographically patterned using a first photo-mask having a single or multiple trench and waveguide pattern arrangement. In addition, an alignment mark or marks may also be utilized on the first photo-mask. After development, a conventional dry etching technique, such as RIE, is used to etch the etch stop layer 203. The portions of the etch stop layer 203 that are removed correspond to the eventual locations of the trenches and waveguides.

As shown in Fig. 5B, the remaining layers of starting material 211 are deposited on the substrate and patterned etch stop layer via conventional deposition techniques. Thus, starting material 211 comprises substrate layer 202, etch stop layer 203, underclad layer 204, core layer 206, and overclad layer 208. Layers 202, 204, 206, and 208 can be comprised of the same materials mentioned above with respect to Figs. 4A-4C. A second etch stop layer (not shown) can be deposited onto the starting material 211.

As is shown in Fig. 5C, a second photolithography/etching technique is utilized to define the waveguide and trench pattern. A second photo-mask, similar to or the same as the first photo-mask described above, having a pattern corresponding to the waveguide structure and the trench positioning is exposed on the photoresist by a conventional light source, such as an ultraviolet laser. Alignment marks may also be utilized on the second photo-mask. While this embodiment of the present invention is not self-aligning, alignment of the waveguide/trench pattern with the patterned etch stop layer is not critical as compared to the alignment necessary in the conventional fabrication technique described above with reference to Figs. 3A-3D.

After a conventional development of the photoresist, and etching the second etch stop layer, preferably a dry etching process such as RIE, ICP, or ion beam etching is utilized to etch away portions of layers 204, 206, and 208 to define the waveguide, resulting in structure 209, shown in Fig. 5C. Because of the presence of the etch stop layer 203 (which protects the portions of the substrate layer 202 or of the first underclad layer), this etching process produces a deeper trench 210, extending at a depth 213 significantly below the core layer 206, and into a portion of substrate layer 202 or of the first underclad that corresponds to the trench location. The etch depth can be controlled by controlling the etch rate (e.g., the length of time) of the process. Thus, this deeper etch ensures that the trench extends fully below the core layer and the underclad layer so that a mirror located in the trench can intercept light propagating in the waveguide and underclad layers.

For example, in practice, conventional RIE processes often produce non-uniform etches. Therefore, in order to etch a trench having a depth of about 30 microns, there may be an undesirable removal of significant portions of the side regions of the substrate without the presence of the etch stop layer. Thus, the etch stop layer prevents the unwanted removal of significant portions of the substrate while forming the trench. In addition, the etch stop layer increases the likelihood of flatter surfaces for the subsequent bonding and encapsulation processes.

The waveguide/trench structure is then encapsulated with a MEMS die to form waveguide device 225, as shown in Fig. 5D. Similar to device 222 shown in Fig. 4C, device 225 comprises the waveguide structure formed above, trench 210, a cavity 212 that is filled with an index matching fluid, and a MEMS die layer 214 that includes a mirror 220 that is coupled to MEMS die layer 214 so that the mirror can move within trench 210 upon actuation. The report and encapsulation technique is similar to that described above.

The advantages according to this embodiment of the present invention include the simultaneous fabrication of trenches and optical waveguides, the fabrication of trenches deeper than the optical waveguides, and the use of an etch stop layer provides a reference plane for the report and encapsulation of the MEMS die.

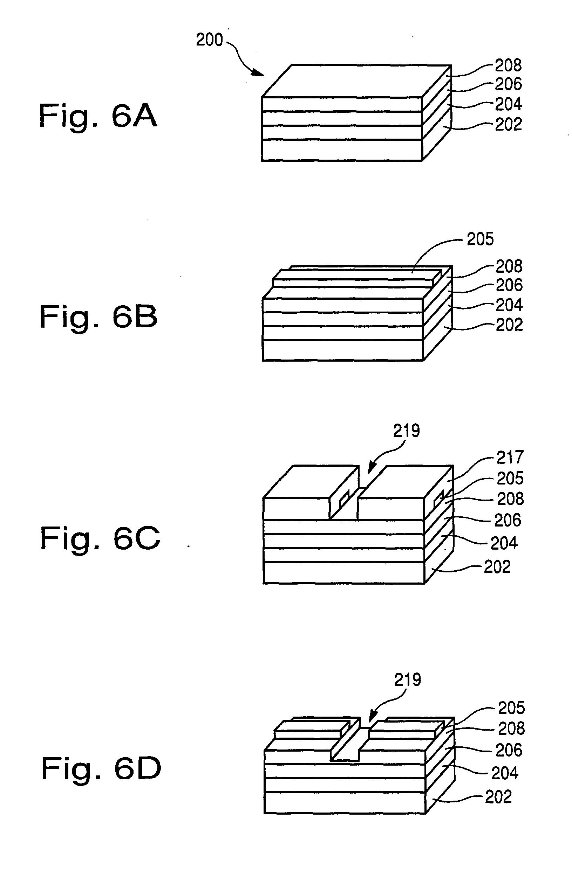

Alternatively, in a third embodiment of the present invention, a method of fabricating an optical waveguide device provides a deep etching of the trenches, based on two silica etching steps. The process according to the third embodiment of the present invention is illustrated with reference to Figs. 6A-6F.

In Fig. 6A, a starting material 200, similar to the starting material described above with reference to Fig. 4A, is provided. Starting material 200 includes a substrate layer 202, an underclad layer 204, a core layer 206, and an overclad layer 208 and is formed using conventional deposition techniques.

As shown in Fig. 6B, an etch stop layer 205 is deposited onto overclad layer 208 and is patterned with the waveguide design using a first photolithography (i.e., by a first photo-mask) and dry etching (e.g., RIE) technique. The thickness of etch stop layer 205 is from about 0.3 to about 10 µm, preferably about 4 µm.

In Fig. 6C, a photoresist layer 217, comprising a conventional thick photoresist material, is deposited onto the overclad layer 208 and patterned etch stop layer 205. Layer 217 has a thickness of about 1 µm to about 5 µm. Layer 217 is patterned with the trench pattern 219 using a second photolithography (i.e., by a second photo-mask). The etch stop layer is patterned with an etching technique to define the trench pattern. In this embodiment, the first and second photo-masks contain alignment marks. As the alignment marks are located on the surface of the wafer, the second photolithography can be aligned with high precision to the first photolithography.

As shown in Fig. 6D, a partial trench etching is performed, where a portion of overclad layer 208, corresponding to the trench location, is removed.

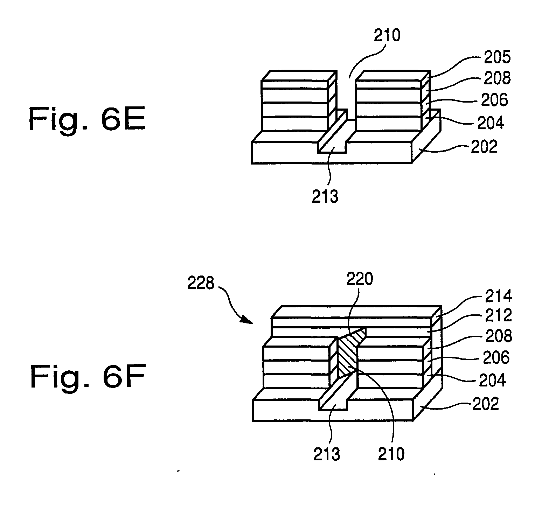

As shown in Fig. 6E, after the residual photoresist removal of layer 217, a deep etching is performed to define simultaneously the full trench 210 and optical waveguide pattern. This process can be performed using the techniques described above.

The waveguide/trench structure is then encapsulated with a MEMS die to form waveguide device 228, as shown in Fig. 6F. Device 228 comprises the waveguide structure formed above, trench 210, a cavity 212 that is filled with an index matching fluid, and a MEMS die layer 214 that includes a mirror 220 that is coupled to MEMS die layer 214 so that the mirror can move within trench 210 upon actuation. The etch stop layer 205 can be removed prior to encapsulation. The underclad and overclad layers 204, 208 and the index matching liquid introduced after the report and encapsulation of the MEMS die, ensure the optical confinement of the propagating light.

The advantages according to this embodiment of the present invention include the simultaneous fabrication of trenches and optical waveguides, the fabrication of trenches deeper than the optical waveguides, and the high precision alignment between trenches and waveguides.

While the invention has been described in detail and with reference to specific embodiments thereof, it will be apparent to one skilled in the art that various changes and modifications can be made therein without departing from the scope of the invention. Thus, the breadth and scope of the present invention should not be limited by any of the above-described exemplary embodiments.

## Claims

1. A method of fabricating an optical waveguide device that includes a waveguide and a trench, comprising:
providing a substrate material that comprises
a substrate layer,
an underclad layer,
a core layer, and
an overclad layer;
simultaneously defining a waveguide and trench pattern in the substrate material; and
etching said substrate material to form a waveguide circuit structure that includes said waveguide and trench pattern.

2. The method according to claim 1, further comprising:
encapsulating the substrate material around said waveguide circuit, said encapsulating includes providing a cover layer and a cavity between said cover layer and said waveguide circuit.

3. The method according to claim 2, wherein said encapsulating comprises providing a MEMS substrate that includes an actuatable mirror coupled thereto, wherein said mirror is positioned such that said mirror can move in a direction in said trench.

4. The method according to claim 3, wherein the trench extends completely across a cross-section of the core layer, and wherein the trench extends across a sufficient portion of a cross-section of the underclad layer such that when the mirror is positioned in the trench, light propagating along the underclad layer is substantially intercepted by the mirror.

5. The method according to claim 2, further comprising:
filling the cavity with an index matching liquid.

6. The method according to claim 1, wherein said simultaneously defining step comprises:
generating an exposure of a photo-mask that includes the trench and waveguide pattern onto the substrate material, and wherein said etching step comprises
performing a dry etch of the substrate material, wherein the trench is etched at a depth such that the trench extends completely across a cross section of the core layer, the trench having a width of about 5 micrometers to about 12 micrometers.

7. A planar optical waveguide device fabricated by the method of claim 1.

8. The method according to claim 1, further comprising:
depositing an etch stop layer on the substrate material;
patterning the etch stop layer with a pattern corresponding to the waveguide and trench pattern; and
performing a deep etch of the substrate material such that a portion of the underclad layer corresponding to a position of the trench is removed during said deep etch.

9. A method of fabricating an optical waveguide device that includes a waveguide and a trench, comprising:
providing a substrate material that comprises
a substrate layer,
a first underclad layer, and
an etch stop layer,
defining a first waveguide and trench pattern on the etch stop layer;
etching the etch stop layer;
depositing a second underclad layer, a core layer, and an overclad layer on the substrate material;
simultaneously defining a second waveguide and trench pattern in the substrate material, said second waveguide and trench pattern substantially corresponding to a position of said first waveguide and trench pattern; and
etching the substrate material to form a waveguide circuit structure that includes said waveguide and trench pattern, said etching comprising a deep etch of the substrate material such that a portion of the first underclad layer corresponding to a position of the trench is removed during said deep etch.

10. The method according to claim 9, further comprising:
encapsulating the substrate material around said waveguide circuit, said encapsulating includes providing a cover layer and a cavity between said cover layer and said waveguide circuit.

11. The method according to claim 10, wherein said encapsulating comprises providing a MEMS substrate that includes an actuatable mirror coupled thereto, wherein said mirror is positioned such that said mirror can move in a direction in said trench.

12. The method according to claim 9, wherein said defining a first waveguide and trench pattern on the etch stop layer comprises
lithographically patterning the etch stop layer using a first photo-mask having the first trench and waveguide pattern arrangement, wherein said simultaneously defining step comprises
generating an exposure of a second photo-mask that includes the trench and waveguide pattern onto the substrate material, and wherein said etching step comprises
performing a dry etch of the substrate material, wherein the trench is etched at a depth such that the trench extends completely across a cross section of the core layer and partially across the first underclad layer, the trench having a width of about 5 micrometers to about 12 micrometers.

13. A method of fabricating an optical waveguide device that includes a waveguide and a trench, comprising:
providing a substrate material that comprises
a substrate layer,
an underclad layer,
a core layer, and
an overclad layer;
depositing an etch stop layer onto the overclad layer;
depositing a first photoresist layer on the etch stop layer and substrate material;
lithographically patterning the etch stop layer with a waveguide pattern;
etching the etch stop layer;
removing the first photoresist layer;
depositing a second photoresist layer on the patterned etch stop layer and substrate material;
lithographically patterning the second photoresist layer with a trench pattern;
performing a partial etch of the etch stop layer such that the etched portion of the etch stop layer corresponds to a position of the trench;
performing a partial etch of the overclad layer such that the etched portion of the overclad layer corresponds to a position of the trench;
removing the second photoresist layer; and
etching the substrate material to form a waveguide circuit structure that includes the waveguide and trench pattern.

14. The method according to claim 13, further comprising:
encapsulating the substrate material around said waveguide circuit, said encapsulating includes providing a cover layer and a cavity between said cover layer and said waveguide circuit.

15. The method according to claim 14, wherein said encapsulating comprises providing a MEMS substrate that includes an actuatable mirror coupled thereto, wherein said mirror is positioned such that said mirror can move in a direction in said trench.

16. A planar optical waveguide device fabricated by the method of claim 15.
